# EUROPEAN PATENT APPLICATION

(11) **EP 2 336 599 A2**
(43) Date of publication of application: **22.06.2011**
(21) Application number: 10015413.7
(22) Date of filing: 08.12.2010
(51) Int. Cl.: F16H 3/00, F16H 3/093

(54) **7-speed layshift geartrain with dual-use meshes and three axes**

(30) Priority: 18.12.2009 US 641829
(71) Applicant: Chrysler Group LLC, Auburn Hills, MI 48326-2766 (US)
(72) Inventor: Silva, Lee I., Macomb Township, Michigan 48044 (US); Martin, Berthold, Shelby Township, Michigan 48310 (US)
(74) Representative: Gleiss, Alf-Olav

(57) **Abstract**

A transmission having dual-use meshes, comprising: a first input shaft (1) having a plurality of driver gears (43,44,45) mounted thereon; a second input shaft (2) having a plurality of driver gears (41,42) mounted thereon, said first and second input shafts (1,2) are concentric;
a first countershaft (3) having a plurality of driven gears (11,14,15,22) rotatably mounted thereon, wherein at least a first driven gear (14) of said plurality of driven gears (11,14,15,22) rotatably mounted on said first countershaft (3) is continuously meshed with at least a first driver gear (42) of said pluralities of driver gears on said first or second input shafts (1,2), and at least a second driven gear (15) of said plurality of driven gears (11,14,15,22) rotatably mounted on said first countershaft (3) is continuously meshed with at least a second driver gear (45) of said pluralities of driver gears on said first or second input shafts (1,2); and
a second countershaft (4) having a plurality of driven gears (12,13,16,17,21) rotatably mounted thereon, at least a first driven gear (16) of said plurality of driven gears (12,13,16,17,21) rotatably mounted on said second countershaft (4) is continuously meshed with at least said first driver gear (42) of said pluralities of driver gears on said first or second input shafts (1,2) and at least a second driven gear (17) of said plurality of driven gears (12,13,16,17,21) rotatably mounted on said second countershaft (4) is continuously meshed with at least said second driver gear (45) of said pluralities of driver gears on said first or second input shafts (1,2).

## Description

### FIELD OF THE INVENTION

Embodiments disclosed herein relate generally to a transmission for a motor vehicle, and more particularly, to a 7-speed layshaft geartrain with dual-use meshes and three axes.

### BACKGROUND OF THE INVENTION

A transmission is typically employed in motor vehicles to transfer power from a propulsion source to driven wheels. A typical propulsion source, such as an internal combustion engine, has a limited range of rotational speeds. Thus, the transmission typically is provided with a means to vary the ratio between the rotational velocity of the propulsion source and the rotational velocity of the driven wheels. Transmissions typically have a plurality of fixed ratios by which the rotational velocity of the propulsion source corresponds to the rotational velocity of the driven wheels.

Typical transmissions employ a clutch mechanism and two shafts. The clutch mechanism interrupts the power transfer between the engine and the transmission by interrupting the linkage between the engine and the transmission. The first shaft of a typical transmission is an input shaft for receiving power from the engine and the second shaft is an output shaft for transmitting power to the driven wheels. Typically, at least two pairs of mated gears are mounted, respectively, on the input and output shafts and the respective pairs of gears are continuously engaged with one another. One gear of each pair is keyed non-rotatably to its respective shaft while the other is freely rotatable on its respective shaft. Thus, although the gears are continually meshed, with nothing more, rotation of the input shaft does nothing to cause rotation of the output shaft. The input shaft and output shaft each include synchronization mechanisms for selectively and fixedly attaching the rotatably attached gears to the input shaft or the output shaft. Once the clutch is engaged and the appropriate synchronization mechanism fixedly attaches a gear to the input shaft or output shaft, power is transferred from the engine, through the clutch, to the input shaft, through the gear on the input shaft, to the corresponding gear on the output shaft, and out of the transmission by the output shaft.

A conventional dual clutch transmission typically includes a transmission input shaft in communication with two clutches, each clutch in communication with an independent input shaft, and two output shafts (countershafts). When the first clutch of the dual clutch assembly is engaged, power is transferred to the first input shaft. Likewise, when the second clutch of the dual clutch assembly is engaged, power is transferred to the second input shaft. Each of the first and second input shafts has its own set of gears fixedly attached. The gears attached to the first and second input shafts are continuously engaged with gears on first and second countershafts. In a typical six speed dual clutch transmission, first, second, third and fourth gears are rotatably affixed to the first countershaft, and fifth, sixth and reverse gears are rotatably affixed to the second countershaft. Such transmissions typically continuously mesh first, third, fifth and reverse gears with the gears fixedly attached to the first input shaft, and continuously mesh second, fourth and sixth gears with gears fixedly attached to the second input shaft. Fourth and sixth gear are typically both meshed with the same gear on the first input shaft or second input shaft.

The first and second countershafts each include synchronization mechanisms for fixedly attaching gears to the first or second countershafts. Once the corresponding clutch is engaged and the appropriate synchronization mechanism fixedly attaches a gear to one of the first or second countershafts, power is transferred from the engine, through the clutch, to the input shaft, through the gear on the input shaft, to the corresponding fixedly attached gear on the countershaft, through a final drive gear, to an output shaft, and output from the transmission.

In a typical dual clutch transmission, reverse gear includes a reverse driver gear meshed to gear on the second input shaft. Typically, first gear and the reverse driver gear are meshed with the same gear on the second input shaft. The reverse driver gear is attached to a reverse gear idler shaft. Also attached to the reverse gear idler shaft is a second reverse driver gear that is meshed with a reverse gear rotatably attached to the first countershaft. Reverse gear is engaged by fixedly attaching the reverse gear to the first countershaft.

As described above, current transmissions require a fourth axis for a reverse idler shaft in order to provide the transmission with reverse gear operation. This adds unnecessary complexity, size and weight to the transmission assembly. The added complexity results in a greater possibility for failure within the transmission. In addition, the added size makes it more difficult to fit the transmission into a motor vehicle and requires engineers to design a vehicle that provides the extra space required by the transmission. Further, because of the complexity and already increased size of the dual clutch transmission, it is difficult to achieve a wide range of gear ratios including both high and low gear ratios. Thus, engineers are faced with a choice between creating a transmission with low ratio number gearing, which typically provides improved fuel economy, or high ratio number gearing, which will enable the vehicle to have brisk acceleration. Choosing gearing with too low ratio number prevents a small displacement and efficient engine from being used with the transmission because the small displacement motor simply does not have the torque to power the vehicle. However, choosing too high ratio number negates many of the benefits of using a small displacement engine as the engine must spin faster and consume more fuel. Thus, a dual clutch transmission is needed that can achieve a wide range of gear ratios while using less parts and having a more compact volume.

It is, therefore, desirable to provide a transmission for an automobile that overcomes the problems of four axes transmissions and has a wide gear ratio spread.

### BRIEF SUMMARY OF THE INVENTION

In an example embodiment, a transmission having dual-use meshes is provided. The transmission has a first input shaft having a plurality of driver gears mounted thereon and a second input shaft having a plurality of driver gears mounted thereon. The first and second input shafts of the transmission are concentric with one another. The transmission also has a first countershaft having a plurality of driven gears rotatably mounted thereon. At least a first driven gear of the plurality of driven gears rotatably mounted on the first countershaft is continuously meshed with at least a first driver gear of the plurality of driver gears on the first or second input shafts. At least a second driven gear of the plurality of driven gears rotatably mounted on the first countershaft is continuously meshed with at least a second driver gear of the plurality of driver gears on the first or second input shafts. The transmission also has a second countershaft having a plurality of driven gears rotatably mounted thereon. At least a first driven gear of the plurality of driven gears rotatably mounted on the second countershaft is continuously meshed with at least the first driver gear of the plurality of driver gears on the first or second input shafts. At least a second driven gear of the plurality of driven gears rotatably mounted on the second countershaft is continuously meshed with at least the second driver gear of the plurality of driver gears on the first or second input shafts.

In another example embodiment, a transmission having a first input shaft having a plurality of driver gears mounted thereon and a second input shaft having a plurality of driver gears mounted thereon is provided. The first and second input shafts of the transmission are concentric with one another. The transmission also includes a first countershaft having a plurality of driven gears rotatably mounted thereon and a reverse driven gear rotatably mounted on the first countershaft. Additionally, the transmission has a second countershaft having a plurality of driven gears rotatably mounted thereon and a reverse driver gear fixedly mounted to one of the plurality of driven gears rotatably mounted to the second countershaft. The reverse driven gear and the reverse driver gear are continuously meshed.

One advantage of the disclosed embodiments is that an improved gear arrangement is provided for a transmission. The transmission has compact dimensions and a wide gear ratio spread. Fourth gear and sixth gear share one driver gear. Likewise, fifth gear and seventh gear share a second driver gear. Further, reverse gear includes a reverse driver gear attached to the second driven gear and a reverse driven gear powered by the reverse driver gear. The reverse driver gear and reverse driven gear achieve a reverse gear ratio of greater than or equal to that of the first gear ratio.

There has thus been outlined, rather broadly, the features of the technology in order that the detailed description that follows may be better understood, and in order that the present contribution to the art may be better appreciated. There are additional features of the technology that will be described and which will form the subject matter of the claims. Additional aspects and advantages of the technology will be apparent from the following detailed description of an exemplary embodiment which is illustrated in the accompanying drawings. The technology is capable of other embodiments and of being practiced and earned out in various ways. Also, it is to be understood that the phraseology and terminology employed are for the purpose of description and should not be regarded as limiting.

### BRIEF DESCRIPTION OF THE DRAWINGS

The technology is illustrated and described herein with reference to the various drawings, in which like reference numbers denote like method steps and/or system components, and in which:

FIG. 1 is a stick drawing of a transmission having a first dual use mesh for the fourth driven gear and the sixth driven gear and a second dual use mesh for the fifth driven gear and seventh driven gear according to an embodiment disclosed herein;

FIG. 2 is a cutaway drawing of the transmission of FIG. 1;

FIG. 3 is gear layout diagram of the transmission of FIG. 1; and

FIG. 4 is table listing example gear ratios for a transmission according to an embodiment disclosed herein.

### DETAILED DESCRIPTION OF THE INVENTION

Before describing the disclosed embodiments of the technology in detail, it is to be understood that the technology is not limited in its application to the details of the particular arrangement shown here since the technology is capable of other embodiments. Also, the terminology used herein is for the purpose of description and not of limitation.

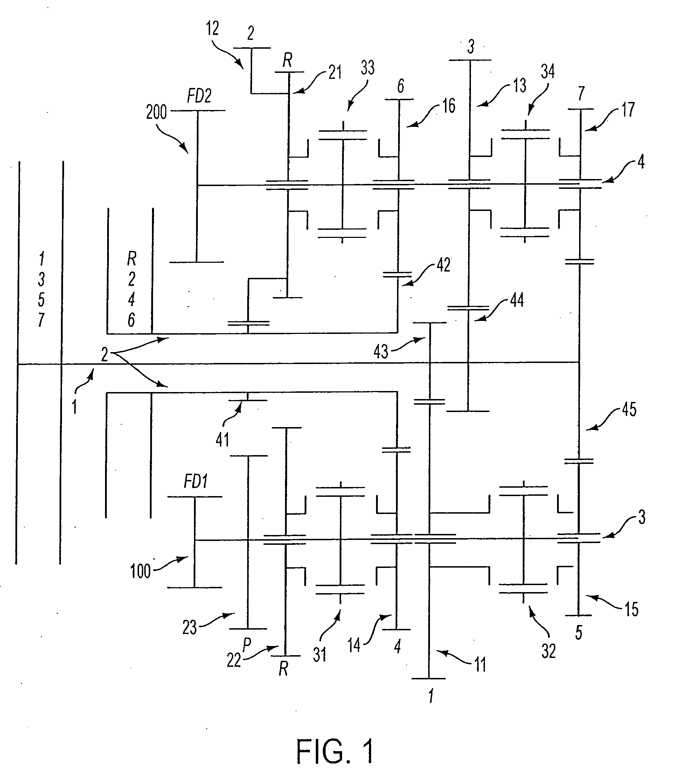

FIG. 1 illustrates a stick drawing of a transmission having a first dual use mesh for the fourth driven gear 14 and the sixth driven gear 16 and a second dual use mesh for the fifth driven gear 15 and seventh driven gear 17 according to an embodiment disclosed herein. The transmission includes a first input shaft 1 and a concentric second input shaft 2 which surrounds at least a portion of the first input shaft 1. The first input shaft 1 includes a plurality of fixedly attached gears 43, 44, 45. The gears 43, 44, 45 fixedly attached to the first input shaft 1 include a first driver gear 43, a third driver gear 44, and a fifth/seventh driver gear 45. A plurality of gears 41, 42 are fixedly attached to the second input shaft 2. The gears 41, 42 fixedly attached to the second input shaft 2 include a second driver gear 41 and a fourth/sixth driver gear 42.

The transmission also includes a first countershaft 3 and a second countershaft 4, each disposed about a different axis from each other, the first input shaft 1 and the second input shaft 2. The first countershaft 3 includes a plurality of rotatably attached gears 11, 14, 15, 22 and a plurality of fixedly attached gears 23, 100. The rotatably attached gears include a first driven gear 11, a fourth driven gear 14, a fifth driven gear 15, and a reverse driven gear 22. The rotatably attached gears 11, 14, 15, 22 are capable of rotating independently of the first countershaft 3. A parking gear 23 and a first final drive pinion 100 are fixedly attached to the first countershaft 3 and rotate with the same angular velocity as the first countershaft 3. The second countershaft 4 includes a plurality of rotatably attached gears 12, 13, 16, 17, 21 and a fixedly attached gear 200. The rotatably attached gears include a second driven gear 12, a third driven gear 13, a sixth driven gear 16, a seventh driven gear 17, and a reverse driver gear 21. The rotatably attached gears 12, 13, 16, 17, 21 are capable of rotating independently of the second countershaft 4. The second driven gear 12 and the reverse driver gear 21 are affixed together as a single unit. Thus, the second driven gear 12 and reverse driver gear 21 rotate with the same angular velocity. A second final drive pinion 200 is fixedly attached to the second countershaft 4 and rotates with the same angular velocity as the second countershaft 4.

Respective gears on the first input shaft 1, second input shaft 2, first countershaft 3, and second countershaft 4 are continually meshed with one another. In particular, the first driven gear 11 is continually meshed with the first driver gear 43, the second driven gear 12 is continually meshed with the second driver gear 41, and the third driven gear 13 is continually meshed with the third driver gear 44. In addition, some of the driver gears 42, 45 are meshed with more than one driven gear 14, 15, 16, 17. In particular, the fourth/sixth driver gear 42 is continually meshed with both the fourth driven gear 14 and the sixth driven gear 16. Likewise, the fifth/seventh driver gear 45 is continually meshed with both the fifth driven gear 15 and the seventh driven gear 17. The reverse driver gear 21 is not meshed with any gears 41, 42, 43, 44, 45 on the first input shaft 1 or second input shaft 2. Rather, the reverse driver gear 21 is fixedly attached to the second driven gear 12 which is meshed, as detailed above, with the second driver gear 41.

The first countershaft 3 and second countershaft 4 further include four synchronizer mechanisms (dog clutches) 31, 32, 33, 34 to selectively key a rotatably mounted gear 11, 12, 13, 14, 15, 16, 17, 21, 22 to its respective first countershaft 3 or second countershaft 4. A fourth/reverse gear dog clutch 31 is affixed to the first countershaft 3 between the reverse driven gear 22 and the fourth driven gear 14. The fourth/reverse gear dog clutch 31 may be moved axially along the first countershaft 3 in the direction of the reverse driven gear 22 or moved axially along the first countershaft 3 in the opposite direction towards the fourth driven gear 14. A first/fifth gear dog clutch 32 is affixed to the first countershaft 3 between the first driven gear 11 and the fifth driven gear 15. The first/fifth gear dog clutch 32 may be moved axially along the first countershaft 3 in the direction of the first driven gear or moved axially along the first countershaft 3 in the opposite direction towards the fifth driven gear 15. A second/sixth gear dog clutch 33 is affixed to the second countershaft 4 between the second driven gear 12 and the sixth driven gear 16. The second/sixth gear dog clutch 33 may be moved axially along the second countershaft 4 in the direction of the second driven gear 12 or moved axially along the second countershaft 4 in the opposite direction towards the sixth driven gear 16. A third/seventh gear dog clutch 34 is affixed to the second countershaft 4 between the third driven gear 13 and the seventh driven gear 17. The third/seventh gear dog clutch 34 may be moved axially along the second countershaft 4 in the direction of the third driven gear 13 or moved axially along the second countershaft 4 in the opposite direction towards the seventh driven gear 17.

Each of the synchronizer mechanisms 31, 32, 33, 34 may be moved axially along its respective first countershaft 3 or second countershaft 4 to contact one of the movably affixed gears 11, 12, 13, 14, 15, 16, 17, 21, 22. Contact between one of the synchronizer mechanisms 31, 32, 33, 34 and a corresponding rotatably attached gear 11, 12, 13, 14, 15, 16, 17, 21, 22 keys the rotatably attached gear 11, 12, 13, 14, 15, 16, 17, 21, 22 to its corresponding synchronizer mechanism 31, 32, 33, 34 and, accordingly, to its respective first countershaft 3 or second countershaft 4. Thus, contact between the synchronizer mechanism 31, 32, 33, 34 and its respective gear 11, 12, 13, 14, 15, 16, 17, 21, 22 locks the gear 11, 12, 13, 14, 15, 16, 17, 21, 22 to its respective countershaft 3, 4 such that the gear 11, 12, 13, 14, 15, 16, 17, 21, 22 spins with the same angular velocity as its respective countershaft 3, 4.

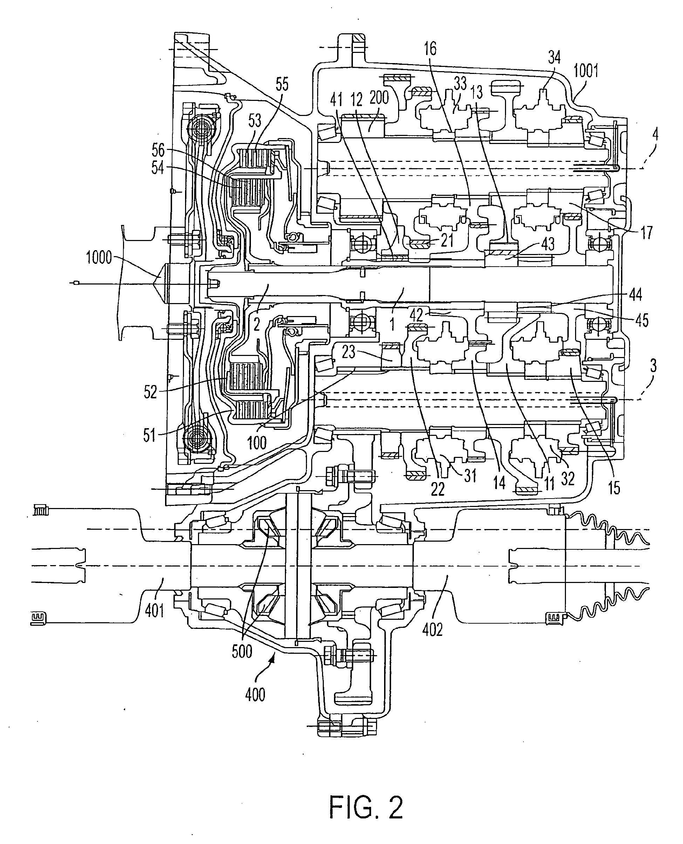

FIG. 2 illustrates a cutaway drawing of the transmission of FIG. 1. The transmission further includes a transmission housing 1001 enclosing and supporting the components of the transmission. A power source output shaft 1000 receives torque from a power source (not shown) and transmits the torque into the transmission. The transmission housing 1001 further encloses a first clutch assembly 51 and a second clutch assembly 52. The first clutch assembly 51 includes a plurality of first clutch plates 53 affixed to the power source output shaft 1000. The second clutch assembly includes a plurality of second clutch plates 54 that are also affixed to the power source output shaft 1000. Rotation of the power source output shaft 1000 causes the plurality of first clutch plates 53 and second clutch plates 54 to rotate. The first clutch assembly 51 and the second clutch assemblies 52 also include a plurality of first clutch disks 55 and second clutch disks 56 fixedly attached to the first input shaft 1 and second input shaft 2 of the transmission, respectively. The plurality of first clutch disks 55 and second clutch disks 56 are in selective contact with the respective plurality of first clutch plates 53 and second clutch plates 54. When the first clutch assembly 51 is engaged, the plurality of first clutch plates 53 and first clutch disks 55 lock one another in frictional engagement to operatively couple the power source output shaft 1000 to the first input shaft 1. Simultaneously, the second clutch assembly 52 is maintained disengaged such that the power source output shaft 1000 is not operatively coupled to the second input shaft 2. To operatively couple the power source output shaft 1000 to the second input shaft 2, the first clutch assembly 51 is disengaged by removing the frictional engagement between the plurality of first clutch plates 53 and first clutch disks 55. Simultaneously, the second clutch assembly 52 is engaged to create friction engagement between the plurality of second clutch plates 54 and second clutch disks 56 to operatively couple the power source output shaft 1000 to the second input shaft 2.

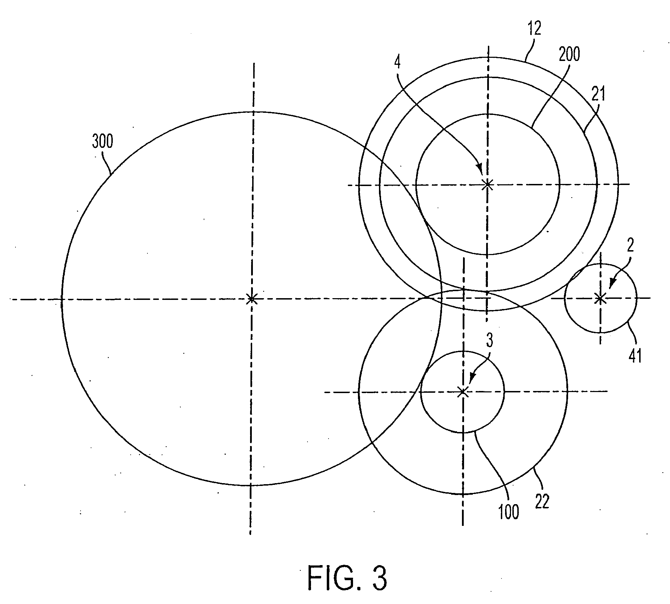

The transmission further includes a ring gear 300 (FIG. 3) continuously meshed with the first final drive pinion 100 and the second final drive pinion 200. Coupled to the ring gear 300 is a differential housing 400. The differential housing 400 is coupled to a differential 500 that divides the torque from the ring gear 300 amongst a first halfshaft 401 and a second halfshaft 402. The first halfshaft 401 and second halfshaft 402 are connected to respective drive wheels (not shown) of the vehicle to provide propulsive force for the vehicle.

FIG. 3 illustrates a gear layout diagram of the transmission of FIG. 1. As detailed above, the transmission includes a first countershaft 3 and a second countershaft 4. The transmission also includes a first input shaft 1 (not shown) and a second input shaft 2 concentric with the first input shaft 1. The first countershaft 3 and the second countershaft 4 rotate about second and third axes, respectively. The first, second and third axes are parallel to one another but not concentric. The transmission also includes a ring gear 300 (FIG. 3) affixed to a differential housing 400 that rotates about a fourth axis different from and parallel to the first, second and third axes. The ring gear 300 is continually meshed with the first final drive pinion 100 of the first countershaft 3 and the second final drive pinion 200 of the second countershaft 4. The second driver gear 41 continuously meshes with the second driven gear 12. Likewise, the reverse driver gear 21 continuously meshes with the reverse driven gear 22.

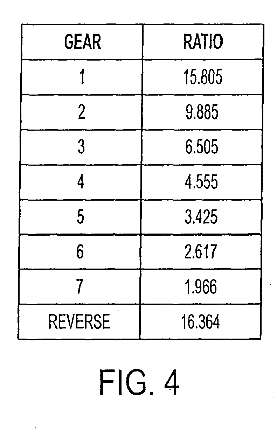

FIG. 4 is table listing example gear ratios for a transmission according to an embodiment disclosed herein. The gear ratios listed provide an example of the large gear quotient between first and seventh gears that may be achieved by the example transmission disclosed herein. The table also lists an example high reverse gear ratio that may be achieved by the transmission. The transmission is designed to accommodate at least 360 Nm of torque across the first driver gear 43 and the first driven gear 11; at least 408 Nm of torque across the second driver gear 41 and the second driven gear 12; at least 450 Nm of torque across the third driver gear 44 and third driven gear 13; at least 450 Nm of torque across the fourth/sixth driver gear 42 and the fourth driven gear 14 or sixth driven gear 16; and at least 450 Nm of torque across the fifth/seventh driver gear 45 and the fifth driven gear 15 or seventh driven gear 17.

Referring again to FIGS. 1 and 2, when the transmission is to be operated in "first gear," the first clutch assembly 51 is engaged to operatively couple the power source output shaft 1000 to the first input shaft 1 and the second clutch assembly 52 is disengaged. Further, the first/fifth gear dog clutch 32 is moved laterally across the first countershaft 3 to couple the first driven gear 11 to the first countershaft 3. As a result, the rotation of the power source output shaft 1000 through the first clutch assembly 51 causes the first input shaft 1 to rotate. Likewise, the first driver gear 43 affixed to the first input shaft 1 also rotates causing the first driven gear 11, now coupled to the first countershaft 3 by the first/fifth gear dog clutch 32, to cause the first countershaft 3 to rotate. The first countershaft 3 rotates causing the first final drive pinion to rotate 100, which causes the differential 500 to rotate, with an example reducing gear ratio of 15.805.

When the transmission is to be operated in "second gear," the second clutch assembly 52 is engaged to operatively couple the power source output shaft 1000 to the second input shaft 2 and the first clutch assembly 51 is disengaged. Further, the second/sixth gear dog clutch 33 is moved laterally across the second countershaft 4 to couple the second driven gear 12 to the second countershaft 4. As a result, the rotation of the power source output shaft 1000 through the second clutch assembly 52 causes the second input shaft 2 to rotate. Likewise, the second driver gear 41 affixed to the second input shaft 2 also rotates causing the second driven gear 12, now coupled to the second countershaft 4 by the second/sixth gear dog clutch 33, to cause the second countershaft 4 to rotate. The second countershaft 4 rotates causing the second final drive pinion 200 to rotate, which causes the differential 500 to rotate, with an example reducing gear ratio of 9.885.

When the transmission is to be operated in "third gear," the first clutch assembly 51 is engaged to operatively couple the power source output shaft 1000 to the first input shaft 1 and the second clutch assembly 52 is disengaged. Further, the third/seventh gear dog clutch 34 is moved laterally across the second countershaft 4 to couple the third driven gear 13 to the second countershaft 4. As a result, the rotation of the power source outputshaft 1000 through the first clutch assembly 51 causes the first input shaft 1 to rotate. Likewise, the third driver gear 44 affixed to the first input shaft 1 also rotates causing the third driven gear 13, now coupled to the second countershaft 4 by the third/seventh gear dog clutch 34, to cause the second countershaft 4 to rotate. The second countershaft 4 rotates causing the second final drive pinion 200 to rotate, which causes the differential 500 to rotate, with an example reducing gear ratio of 6.505.

When the transmission is to be operated in "fourth gear," the second clutch assembly 52 is engaged to operatively couple the power source output shaft 1000 to the second input shaft 2 and the first clutch assembly 51 is disengaged. Further, the fourth/reverse gear dog clutch 31 is moved laterally across the first countershaft to couple the fourth driven gear 14 to the first countershaft 3. As a result, the rotation of the power source output shaft 1000 through the second clutch assembly 52 causes the second input shaft 2 to rotate. Likewise, the fourth/sixth driver gear 42 affixed to the second input shaft 2 also rotates causing the fourth driven gear 14, now coupled to the first countershaft 3 by the fourth/reverse gear dog clutch 31, to cause the first countershaft 3 to rotate. The first countershaft 3 rotates causing the first final drive pinion 100 to rotate, which causes the differential 500 to rotate, with an example reducing gear ratio of 4.555.

When the transmission is to be operated in "fifth gear," the first clutch assembly 51 is engaged to operatively couple the power source output shaft 1000 to the first input shaft 1 and the second clutch assembly 52 is disengaged. Further, the first/fifth gear dog clutch 32 is moved laterally across the first countershaft to couple the fifth driven gear 15 to the first countershaft 3. As a result, the rotation of the power source output shaft 1000 through the first clutch assembly 51 causes the first input shaft 1 to rotate. Likewise, the fifth/seventh driver gear 45 affixed to the first input shaft 1 also rotates causing the fifth driven gear 15, now coupled to the first countershaft 3 by the first/fifth gear dog clutch 32, to cause the first countershaft 3 to rotate. The first countershaft 3 rotates causing the first final drive pinion to rotate 100, which causes the differential 500 to rotate, with an example reducing gear ratio of 3.425.

When the transmission is to be operated in "sixth gear," the second clutch assembly 52 is engaged to operatively couple the power source output shaft 1000 to the second input shaft 2 and the first clutch assembly 51 is disengaged. Further, the second/sixth gear dog clutch 33 is moved laterally across the second countershaft 4 to couple the sixth driven gear 16 to the second countershaft 4. As a result, the rotation of the power source output shaft 1000 through the second clutch assembly 52 causes the second input shaft 2 to rotate. Likewise, the fourth/sixth driver gear 42 affixed to the second input shaft 2 also rotates causing the sixth driven gear 16, now coupled to the second countershaft 4 by the second/sixth gear dog clutch 33, to cause the second countershaft 4 to rotate. The second countershaft 4 rotates causing the second final drive pinion 200 to rotate, which causes the differential 500 to rotate, with an example reducing gear ratio of 2.617.

When the transmission is to be operated in "seventh gear," the first clutch assembly 51 is engaged to operatively couple the power source outputt shaft 1000 to the first input shaft 1 and the second clutch assembly 52 is disengaged. Further, the third/seventh gear dog clutch 34 is moved laterally across the second countershaft 4 to couple the seventh driven gear 17 to the second countershaft 4. As a result, the rotation of the power source output shaft 1000 through the first clutch assembly 51 causes the first input shaft 1 to rotate. Likewise, the fifth/seventh driver gear 45 affixed to the first input shaft 1 also rotates causing the seventh driven gear 13, now coupled to the second countershaft 4 by the third/seventh gear dog clutch 34, to cause the second countershaft 4 to rotate. The second countershaft 4 rotates causing the second final drive pinion 200 to rotate, which causes the differential 500 to rotate, with an example reducing gear ratio of 1.966.

When the transmission is to be operated in "reverse gear," the second clutch assembly 52 is engaged to operatively couple the power source output shaft 1000 to the second input shaft 2 and the first clutch assembly 51 is disengaged. Further, the fourth/reverse gear dog clutch 31 is moved laterally across the first countershaft 3 to couple the reverse driven gear 22 to the first countershaft 3. As a result, the rotation of the power source output shaft 1000 through the second clutch assembly 52 causes the second input shaft 2 to rotate. Likewise, the second driver gear 41 affixed to the second input shaft 2 also rotates causing the second driven gear 12 and, correspondingly, the reverse driver gear 21 affixed to the second driven gear 12, to rotate. Because the second/sixth gear dog clutch 33 is not engaged with the second driven gear 12, the rotation of the second driven gear 12 does not cause the second countershaft 4 to rotate. The reverse driver gear 21 is continuously meshed with the reverse driven gear 22. Thus, the rotation of the reverse driver gear 21 causes the reverse driven gear 22 to rotate. The reverse driven gear is coupled to the first countershaft 3 by the fourth/reverse gear dog clutch 31 and, therefore, causes the first countershaft 3 to rotate. The rotation of the first countershaft 3 causes the first final drive pinion 100 to rotate, which causes the differential 500 to rotate, with an example reducing gear ratio of 16.364.

Although this technology has been illustrated and described herein with reference to preferred embodiments and specific examples thereof, it will be readily apparent to those of ordinary skill in the art that other embodiments and examples can perform similar functions and/or achieve like results. All such equivalent embodiments and examples are within the spirit and scope of the technology and are intended to be covered by the following claims.

Thus, the embodiments disclosed provide an improved transmission of compact dimensions having a wide gear ratio spread. Fourth gear and sixth gear share one driver gear and fifth gear and seventh gear share a second driver gear. Further, reverse gear includes a reverse driver gear attached to the second driven gear and a reverse driven gear powered by the reverse driver gear. The reverse driver gear and reverse driven gear achieve a reverse gear ratio of greater than or equal to that of the first gear ratio.

## Claims

1. A transmission having dual-use meshes, comprising:
a first input shaft having a plurality of driver gears mounted thereon;
a second input shaft having a plurality of driver gears mounted thereon, said first and second input shafts are concentric;
a first countershaft having a plurality of driven gears rotatably mounted thereon, wherein at least a first driven gear of said plurality of driven gears rotatably mounted on said first countershaft is continuously meshed with at least a first driver gear of said plurality of driver gears on said first or second input shafts, and at least a second driven gear of said plurality of driven gears rotatably mounted on said first countershaft is continuously meshed with at least a second driver gear of said plurality of driver gears on said first or second input shafts; and
a second countershaft having a plurality of driven gears rotatably mounted thereon, at least a first driven gear of said plurality of driven gears rotatably mounted on said second countershaft is continuously meshed with at least said first driver gear of said plurality of driver gears on said first or second input shafts, and at least a second driven gear of said plurality of driven gears rotatably mounted on said second countershaft is continuously meshed with at least said second driver gear of said plurality of driver gears on said first or second input shafts.

2. The transmission of claim 1, further comprising a plurality of dog clutch mechanisms configured to selectively non-rotatably affix at least one of said plurality of driven gears to said first countershaft or said second countershaft.

3. The transmission of claim 1, further comprising:
a first final drive pinion fixedly mounted on said first countershaft;
a second final drive pinion fixedly mounted on said second countershaft; and
a ring gear in communication with a transmission output, wherein said ring gear is continuously meshed with said first final drive pinion and said second final drive pinion.

4. The transmission of claim 3, further comprising:
a reverse driver gear fixedly connected to one of said plurality of driven gears rotatably mounted to said second countershaft; and
a reverse driven gear rotatably mounted to said first countershaft and continuously meshed with said reverse driver gear.

5. The transmission of claim 4, wherein said reverse driver gear and said reverse driven gear are configured to provide a reverse gear ratio greater than or equal to the gear ratio of any of the other of said plurality of gears.

6. The transmission of claim 4, wherein said plurality of driver gears, said plurality of driven gears rotatably mounted on said first countershaft, said plurality of driven gears rotatably mounted on said second countershaft, said reverse driver gear and said reverse driven gear of said transmission are formed on three axes, and wherein:
said first axis comprises said first input shaft, said second input shaft and said plurality of driver gears;
said second axis comprises said first countershaft, said plurality of driven gears rotatably mounted on said first countershaft, said reverse driven gear, and said first final drive pinion; and
said third axis comprises said second countershaft, said plurality of driven gears rotatably mounted on said second countershaft, said reverse driver gear, and said second final drive pinion.

7. The transmission of claim 1, further comprising:
a reverse driver gear fixedly connected to one of said plurality of driven gears rotatably mounted on said second countershaft; and
a reverse driven gear rotatably mounted to said first countershaft and continuously meshed with said reverse driver gear.

8. The transmission of claim 7, wherein said reverse driver gear and said reverse driven gear are configured to provide a reverse gear ratio greater than or equal to the gear ratio of any of the other of said plurality of gears.

9. The transmission of claim 8, wherein said plurality of driver gears, said plurality of driven gears rotatably mounted on said first countershaft, said plurality of driven gears rotatably mounted on said second countershaft, said reverse driver gear and said reverse driven gear of said transmission are formed on three axes, wherein:
said first axis comprises said first input shaft, said second input shaft and said plurality of driver gears;
said second axis comprises said first countershaft, said plurality of driven gears rotatably mounted on said first countershaft, and said reverse driven gear; and
said third axis comprises said second countershaft, said plurality of driven gears rotatably mounted on said second countershaft, and said reverse driver gear.

10. A transmission, comprising:
a first input shaft having a plurality of driver gears mounted thereon;
a second input shaft having a plurality of driver gears mounted thereon, wherein said first and second input shafts are concentric;
a first countershaft having a plurality of driven gears rotatably mounted thereon;
a reverse driven gear rotatably mounted on said first countershaft;
a second countershaft having a plurality of driven gears rotatably mounted thereon; and
a reverse driver gear fixedly mounted to one of said plurality of driven gears rotatably mounted to said second countershaft, wherein said reverse driven gear and said reverse driver gear are continuously meshed.

11. The transmission of claim 10, wherein said reverse driver gear and said reverse driven gear are configured to provide a reverse gear ratio greater than or equal to the gear ratio of any of the other of said plurality of gears.

12. The transmission of claim 10, wherein said plurality of driver gears, said plurality of driven gears rotatably mounted on said first countershaft, said plurality of driven gears rotatably mounted
on said second countershaft, said reverse driver gear and said reverse driven gear of said transmission are formed on three axes, and wherein:
said first axis comprises said first input shaft, said second input shaft and said plurality of driver gears;
said second axis comprises said first countershaft, said plurality of driven gears rotatably mounted on said first countershaft, and said reverse driven gear; and
said third axis comprises said second countershaft, said plurality of driven gears rotatably mounted on said second countershaft, and said reverse driver gear.

13. The transmission of claim 10, wherein:
said plurality of gears rotatably mounted on said first countershaft further comprises:
a first driven gear of said plurality of driven gears rotatably mounted on said first countershaft continuously meshed with at least a first driver gear of said plurality of driver gears on said first or second input shafts; and
a second driven gear of said plurality of driven gears rotatably mounted on said first countershaft continuously meshed with at least a second driver gear of said plurality of driver gears on said first or second input shafts; and
said plurality of gears rotatably mounted on said second countershaft further comprises:
a first driven gear of said plurality of driven gears rotatably mounted on said second countershaft continuously meshed with at least said first driver gear of said plurality of driver gears on said first or second input shafts; and
at second driven gear of said plurality of driven gears rotatably mounted on said second countershaft continuously meshed with at least said second driver gear of said plurality of driver gears on said first or second input shafts.

14. The transmission of claim 13, wherein said reverse driver gear and said reverse driven gear are configured to provide a reverse gear ratio greater than or equal to the gear ratio of any of the other of said plurality of gears.

15. The transmission of claim 13, wherein said plurality of driver gears, said plurality of driven gears rotatably mounted on said first countershaft, said plurality of driven gears rotatably mounted on said second countershaft, said reverse driver gear and said reverse driven gear of said transmission are formed on three axes, wherein:
said first axis comprises said first input shaft, said second input shaft and said plurality of driver gears;
said second axis comprises said first countershaft, said plurality of driven gears rotatably mounted on said first countershaft, and said reverse driven gear; and
said third axis comprises said second countershaft, said plurality of driven gears rotatably mounted on said second countershaft, and said reverse driver gear.

16. The transmission of claim 15, further comprising:
a first final drive pinion fixedly mounted on said first countershaft;
a second final drive pinion fixedly mounted on said second countershaft; and
a ring gear in communication with a transmission output, wherein said ring gear is continuously meshed with said first final drive pinion and said second final drive pinion, and said ring gear forms a fourth axis of said transmission.
